# EUROPÄISCHE PATENTANMELDUNG

(11) **EP 3 293 500 A2**
(43) Veröffentlichungstag der Anmeldung: **14.03.2018**
(21) Anmeldenummer: 17189892.7
(22) Anmeldetag: 07.09.2017
(51) Int. Cl.: G01G 13/18

(54) **SCHALENWAAGE ZUM WIEGEN UND ABWERFEN VON FASERKOMPONENTEN AUF EIN MISCHBAND**

(30) Priorität: 07.09.2016 DE 102016116784
(71) Anmelder: TEMAFA Maschinenfabrik GmbH, 51469 Bergisch Gladbach (DE)
(72) Erfinder: MORGNER, Jörg, 51515 Kürten (DE)
(74) Vertreter: Bergmeier, Werner

(57) **Zusammenfassung**

Die Erfindung betrifft eine Schalenwaage (1) zum Wiegen und Abwerfen von Faserkomponenten (32) auf ein Mischband (34) mit einem nach oben offenen Behälter (2), der mehrere Seitenwände (4, 5, 6, 7) und einen in Behälterlängsrichtung zweigeteilten Boden (9) umfasst, wobei der Boden (9) durch zwei drehbar angelenkte Bodenklappen (10, 11) ausgebildet ist, die aus einer aneinander anliegenden inneren Schließstellung voneinander weg in eine äußere Offenstellung rotierbar sind. Erfindungsgemäß sind die beiden Bodenklappen (10, 11) zueinander asymmetrisch ausgebildet, so dass diese unterschiedlich große Bodenflächen (18, 19) aufweisen. Zusätzlich oder alternativ weist zumindest eine der beiden Bodenklappen (10, 11) an ihrer Bodenfläche (18, 19) zumindest in einem Bereich ein Rückhaltemittel (28) auf, mittels dem beim Öffnen der zugeordneten Bodenklappe (18, 19) ein Teil der Faserkomponenten (32) mittels Form- und/oder Reibschluss bis zu einem Teilöffnungswinkel (β) zurückhaltbar ist.

## Beschreibung

Die vorliegende Erfindung betrifft eine Schalenwaage zum Wiegen und Abwerfen von Faserkomponenten auf ein Mischband mit einem nach oben offenen Behälter, der mehrere Seitenwände und einen Boden umfasst, wobei der Boden durch eine einzelne drehbar angelenkte Bodenklappe ausgebildet ist, die aus einer an einer der Seitenwände anliegenden Schließstellung in eine von dieser Seitenwand weggeklappten Offenstellung rotierbar ist, oder wobei der Boden durch zwei drehbar angelenkte Bodenklappen ausgebildet ist, die aus einer aneinander anliegenden inneren Schließstellung voneinander weg in eine äußere Offenstellung rotierbar sind.

Des Weiteren betrifft die vorliegende Erfindung eine Schalenwaage zum Wiegen und Abwerfen von Faserkomponenten auf ein Mischband mit einem nach oben offenen Behälter, der mehrere Seitenwände und einen Boden umfasst, wobei der Boden durch eine einzelne drehbar angelenkte Bodenklappe ausgebildet ist, die aus einer an einer der Seitenwände anliegenden Schließstellung in eine von dieser Seitenwand weggeklappten Offenstellung rotierbar ist, oder wobei der Boden in Behälterlängsrichtung zweigeteilt ist und durch zwei drehbar angelenkte Bodenklappen ausgebildet ist, die aus einer aneinander anliegenden inneren Schließstellung voneinander weg in eine äußere Offenstellung rotierbar sind, mit einem Steuerungsmechanismus zum Schließen und Öffnen der einzelnen Bodenklappe oder der beiden Bodenklappen des zweigeteilten Bodens und mit einer elektronischen Steuerung zum Steuern des Steuerungsmechanismus.

Des Weiteren betrifft die vorliegende Erfindung eine Mischvorrichtung für Faserkomponenten mit einem Mischband und zumindest einer über dem Mischband angeordneten Schalenwaage.

Mischvorrichtungen dienen der Herstellung genauer und intensiver Mischungen beispielsweise für die Spinnerei und die Vliesstoffindustrie. Gemischt werden verschiedene Chemiefasern, Baumwolle und Chemiefasern, verschiedene rückgewonnene Abfallfasern, Baumwolle und rückgewonnene Abfallfasern. Bei Hochproduktions-Wiegekastenspeisern entsteht in der Praxis durch die meist mittig über dem Mischband angeordnete Schalenwaage ein Schüttkegel, der bei mehreren, hintereinander angeordneten Maschinen in kurzer Zeit zu hohen Faseranhäufungen führt. Dabei können in nachteiliger Weise Fehlwägungen durch nicht vollständig entleerte Waagebehälter und mittig zu hohe Materialdichten mit Störungen im Materialtransport und in der Öffnung an der nachgeschalteten Mischwalze auftreten.

Aus der US 7,455,445 B2 ist eine Vorrichtung zum Mischen von Faserkomponenten, z. B. Faserflocken, insbesondere in der Spinnereivorbereitung, Faservliesherstellung o. dgl., bekannt, bei der das zu dosierende Fasermaterial in mindestens zwei Wiegebehältern gefördert wird und das Fasermaterial nach erfolgter Wägung aus den mindestens zwei Wiegebehältern auf ein Mischband abgeworfen wird. Die Wiegebehälter sind oberhalb des Mischbandes - in Bandlaufrichtung gesehen - hintereinander angeordnet. Zur Vermeidung von Störungen verursachenden Schüttkegeln ist die Position mindestens eines Wiegebehälters quer zur Längserstreckung des Mischbandes ortsveränderlich einstellbar. Nachteilig hierbei ist, der hohe konstruktive Aufwand der Vorrichtung, so dass diese sehr Fehleranfällig und in der Herstellung teuer ist.

Aufgabe der vorliegenden Erfindung ist es somit, eine in der Herstellung kostengünstigere Mischvorrichtung zu schaffen, mittels der eine homogene Verteilung der Faserkomponenten in Querrichtung des Mischbandes erzielt werden kann.

Die Aufgabe wird gelöst durch eine Schalenwaage und eine Mischvorrichtung mit den Merkmalen der unabhängigen Patentansprüche.

Vorgeschlagen wird eine Schalenwaage zum Wiegen und Abwerfen von Faserkomponenten auf ein Mischband. Derartige Schalenwaagen sind insbesondere vorgesehen für Wiegekastenspeiser in der Spinnerei und Fließstoffindustrie. Die Schalenwaage umfasst einen nach oben offenen Behälter. Der Behälter weist mehrere Seitenwände und einen in Behälterlängsrichtung zweigeteilten Boden auf. Der Boden ist durch eine einzelne drehbar angelenkte Bodenklappe ausgebildet, die aus einer an einer der Seitenwände anliegenden Schließstellung in eine von dieser Seitenwand weggeklappten Offenstellung rotierbar ist. Alternativ ist der Boden in Behälterlängsrichtung zweigeteilt und durch zwei, insbesondere an den Seitenwänden, drehbar angelenkte Bodenklappen ausgebildet. Die beiden Bodenklappen sind aus einer aneinander anliegenden inneren Schließstellung voneinander weg in eine äußere Offenstellung rotierbar. In der Schließstellung ist der Behälter nach unten hin geschlossen, so dass durch seine obere Öffnung Faserkomponenten eingefüllt und anschließend gewogen werden können. In der Offenstellung ist der Behälter nach unten hin geöffnet, so dass die eingefüllten und abgewogenen Faserkomponenten auf das Mischband abgeworfen werden können.

Die einzelne Bodenklappe oder zumindest eine der beiden Bodenklappen des zweiteiligen Bodens weist an ihrer Bodenfläche, d.h. im Bereich der Bodenfläche, zumindest in einem Bereich ein Rückhaltemittel auf. Das Rückhaltemittel ist derart ausgebildet und/oder angeordnet, dass mittels diesem beim Öffnen der zugeordneten Bodenklappe ein Teil der Faserkomponenten mittels Form- und/oder Reibschluss bis zu einem Teilöffnungswinkel zurückhaltbar ist.

Durch das Rückhaltemittel kann die Menge und der Ort der ausschüttbaren Faserkomponenten in Abhängigkeit des Öffnungswinkels beeinflusst werden.

So wird durch das Haltemittel eine Teilmenge der Faserkomponenten bis zu einem Teilöffnungswinkel im Inneren des Behälters zurückgehalten. Erst wenn beim Weiterrotieren der festgelegte Teilöffnungswinkel überschritten wird, können die zurückgehaltenen Faserkomponenten das Rückhaltemittel überwinden und auf dem Mischband abgeladen werden. Dies erfolgt ferner aufgrund der Rotation der zumindest einen Bodenklapp an einer zum ersten Abladeort in Querrichtung des Mischbandes verlagerten Position.

Durch das Rückhaltemittel kann somit vorteilhafterweise eine homogenere Verteilung der Faserkomponenten in Querrichtung des Mischbandes erzielt werden. Hierdurch kann eine vollständige Entleerung der Schalenwaage sichergestellt werden, da Schüttkegel vermieden werden. Ferner werden Störungen beim Materialtransport vermieden. Des Weiteren kann hierdurch eine sehr kostengünstige Schalenwaage geschaffen werden, mittels der eine sehr gute Verteilung erzielt werden kann.

Vorteilhaft ist es, wenn das Rückhaltemittel von der Schüttkante beabstandet ist. Hierdurch kann sichergestellt werden, dass die zwischen der Schüttkante und dem Rückhaltemittel befindlichen Faserkomponenten unmittelbar abgeworfen werden und die hinter dem Rückhaltemittel oder im Bereich des Rückhaltemittels angeordneten Faserkomponenten durch dieses bis zu einem gewissen Öffnungswinkel zurückgehalten werden. Hierdurch können in unterschiedlichen Bereichen des Mischbandes unterschiedlich große Mengen der Faserkomponenten abgeworfen werden.

Vorteilhaft ist es, wenn das Rückhaltemittel eine Rückhaltestruktur ist. Hierbei kann die Rückhaltestruktur beispielsweise eine Riffelung, eine Körnung und/oder eine Wellung, d.h. wellenförmige Struktur, sein. Die Rückhaltestruktur ist derart ausgebildet, dass diese vorzugsweise im Vergleich zu einem rückhaltemittelfreien Bereich der Bodenfläche eine höhere Rauigkeit und/oder einen höheren Reibungskoeffizienten aufweist.

Alternativ oder zusätzlich ist es vorteilhaft, wenn das Rückhaltemittel zumindest ein Rückhalteelement ist. Hierbei kann das Rückhalteelement beispielsweise eine Erhebung und/oder Vertiefung sein. Mehrere hintereinander angeordnete Rückhalteelemente können hierbei eine Rückhaltestruktur bilden. Die Rückhalteelemente erstrecken sich vorzugsweise parallel zur Längsmittelebene und/oder über die gesamte Länge der zugeordneten Bodenklappe, d.h. insbesondere der einzelnen Bodenklappe oder einer der beiden Bodenklappen des zweigeteilten Bodens. Vorzugsweise weisen zumindest zwei Rückhalteelemente eine zueinander unterschiedliche Größe auf.

Vorteilhaft ist es, wenn die Rückhaltestruktur und/oder das Rückhalteelement einteilig mit der Bodenklappe ausgebildet ist. Hierbei kann die Bodenklappe beispielsweise derart verpresst sein, dass diese eine Wellenform aufweist. Alternativ kann die Rückhaltestruktur und/oder das Rückhalteelement in die Bodenfläche der Bodenklappe eingearbeitet sein, was insbesondere bei einer als Riffelung ausgebildeten Rückhaltestruktur der Fall wäre. Alternativ ist es aber ebenso vorteilhaft, wenn die Rückhaltestruktur und/oder das Rückhalteelement mit der Bodenklappe verbunden, insbesondere verklebt, verschraubt, verschweißt und/oder verpresst, ist. Um den Abwurfzeitpunkt, den Abwurfort und/oder die Abwurfmenge der Faserkomponenten beeinflussen zu können, ist es vorteilhaft, wenn die Rückhaltestruktur und/oder das Rückhalteelement eine, insbesondere plane, konkave und/oder konvexe Rückhaltefläche aufweist, die vorzugsweise lotrecht zur Bodenfläche angeordnet ist oder gegenüber dieser geneigt ist. Des Weiteren ist es ebenso denkbar, dass die Rückhaltefläche als Oberfläche der Rückhaltestruktur ausgebildet ist. Hierbei kann die Rückhaltefläche eine regelmäßige und/oder unregelmäßige Struktur aufweisen.

Vorteilhaft ist es, wenn die einzelne Bodenklappe oder zumindest eine der beiden Bodenklappen des zweigeteilten Bodens zumindest teilweise als Blechbiegeteil ausgebildet ist. Diesbezüglich ist es ferner vorteilhaft, wenn die einzelne Bodenklappe oder zumindest eine der beiden Bodenklappen des zweigeteilten Bodens eine konstante Wandstärke aufweist. Zusätzlich oder alternativ ist es vorteilhaft, wenn die einzelne Bodenklappe oder zumindest eine der beiden Bodenklappen des zweigeteilten Bodens derart geformt und/oder derart aus mehreren Einzelteilen zusammengefügt, insbesondere zusammengeschweißt, ist, dass die Bodenklappe in einem Bereich eine das Rückhaltelement und/oder die Rückhaltestruktur bildende Form aufweist.

Vorteilhaft ist es, wenn die Rückhaltefläche des Rückhalteelements mit der Rückhaltestruktur versehen ist.

Auch ist es vorteilhaft, wenn sich im Falle der beiden Bodenklappen des zweigeteilten Bodens das Rückhalteelement einer der beiden Bodenklappen in den Bereich der anderen Bodenklappe hineinerstreckt.

Vorteilhaft ist es, wenn zumindest eine der Bodenklappen von der Schüttkante ausgehend nach außen hin mehrere hintereinander angeordnete Rückhaltemittel, insbesondere Rückhaltestrukturen und/oder Rückhalteelemente, aufweist.

Vorgeschlagen wird ferner eine Schalenwaage zum Wiegen und Abwerfen von Faserkomponenten auf ein Mischband, die vorzugsweise gemäß der vorangegangenen Beschreibung ausgebildet ist, wobei die genannten Merkmale einzeln oder in beliebiger Kombination vorhanden sein können. Derartige Schalenwaagen sind insbesondere vorgesehen für Wiegekastenspeiser in der Spinnerei und Fließstoffindustrie. Die Schalenwaage umfasst einen nach oben offenen Behälter. Der Behälter weist mehrere Seitenwände und einen in Behälterlängsrichtung zweigeteilten Boden auf. Der Boden ist in Behälterlängsrichtung zweigeteilt und durch zwei, insbesondere an den Seitenwänden, drehbar angelenkte Bodenklappen ausgebildet. Die beiden Bodenklappen sind aus einer aneinander anliegenden inneren Schließstellung voneinander weg in eine äußere Offenstellung rotierbar. In der Schließstellung ist der Behälter nach unten hin geschlossen, so dass durch seine obere Öffnung Faserkomponenten eingefüllt und anschließend gewogen werden können. In der Offenstellung ist der Behälter nach unten hin geöffnet, so dass die eingefüllten und abgewogenen Faserkomponenten auf das Mischband abgeworfen werden können. Die beiden Bodenklappen sind zueinander derart asymmetrisch ausgebildet, dass diese unterschiedlich große Bodenflächen aufweisen.

Insbesondere aufgrund der Asymmetrie kann vorteilhafterweise in Querrichtung des dafür vorgesehenen Mischbandes die Position bestimmt werden, an der der Abwurf der Faserkomponenten starten soll. Des Weiteren kann durch die asymmetrische Ausgestaltung der Bodenklappen das Fassungsvolumen der Faserkomponenten der jeweiligen Bodenklappe ausgeglichen werden. So wird der Behälter in der Praxis nicht homogen mit den Faserkomponenten befüllt. Stattdessen bildet sich bereits im Inneren des Behälters eine ungleichmäßige Verteilung der Faserkomponenten. Wenn beispielsweise beim Befüllen eine einseitig erhöhte Befüllung des Behälters stattfindet, ist es von Vorteil, wenn in diesem Bereich die Bodenklappe mit der geringeren Bodenfläche angeordnet ist, da die Füllhöhe in diesem Bereich höher ist. Im Bereich der niedrigeren Füllhöhe ist demnach die Bodenklappe mit der größeren Bodenfläche angeordnet. Im Vergleich fassen demnach beide Bodenklappen ein zueinander angeglichenes Fassungsvolumen der Faserkomponenten. Hierdurch kann infolgedessen eine homogenere Verteilung der Faserkomponenten in Querrichtung des Mischbandes beim Abladen bewirkt werden. Infolgedessen kann durch die beiden zueinander asymmetrischen Bodenklappen der Abladeort in Querrichtung des Mischbands zu Beginn der Öffnungsphase beeinflusst werden. Auch kann Fassungsvolumen der beiden Bodenklappen beeinflusst werden.

Durch die asymmetrische Ausgestaltung der Bodenflächen kann somit vorteilhafterweise eine homogenere Verteilung der Faserkomponenten in Querrichtung des Mischbandes erzielt werden. Hierdurch kann eine vollständige Entleerung der Schalenwaage sichergestellt werden, da Schüttkegel vermieden werden. Ferner werden Störungen beim Materialtransport vermieden.

Des Weiteren kann hierdurch eine sehr kostengünstige Schalenwaage geschaffen werden mittels der eine sehr gute Verteilung erzielt werden kann.

Vorteilhaft ist es, wenn die beiden Bodenflächen zueinander in Behälterlängsrichtung gleich lang und/oder in Behälterquerrichtung unterschiedlich breit sind. Hierdurch kann vorteilhafterweise das Fassungsvolumen der jeweiligen Bodenklappe beeinflusst werden.

Auch ist es vorteilhaft, wenn die beiden Bodenklappen in der Schließstellung im Bereich einer Trennebene zumindest in einem Abschnitt aneinander anliegen. Hierdurch kann sichergestellt werden, dass die beiden Bodenklappen in ihrem Berührungsbereich sicher abschließen, so dass die Faserkomponenten im Inneren des Behälters gehalten werden. Zusätzlich oder alternativ ist es ferner vorteilhaft, wenn die Trennebene zu einer Längsmittelebene des Behälters einen translatorischen Versatz aufweist. Hierdurch kann eine entsprechend asymmetrische Ausgestaltung der beiden Bodenklappen erzielt werden, so dass diese ein zueinander unterschiedliches Fassungsvolumen aufweisen. Hierdurch kann einer inhomogenen Befüllung der Schalenwaage entgegengewirkt werden, was sich wiederum auf eine homogene Ausschüttung der Faserkomponenten in Querrichtung des Mischbandes positiv auswirkt.

Vorteilhaft ist es, wenn die Bodenfläche, insbesondere ein erster Teilbereich, zumindest einer der beiden Bodenklappen derart geneigt ist, dass diese in einer Querschnittsansicht des Behälters in der Schließstellung von der Schüttkante ausgehend nach außen hin abfällt und/oder ansteigt. Hierdurch kann der Auswurfwinkel beeinflusst werden, indem die Faserkomponenten in der Öffnungsphase der Schalenwaage aus der Abwurföffnung austreten.

Des Weiteren ist es vorteilhaft, wenn die Bodenfläche zumindest einer der beiden Bodenklappen einen sich an den ersten Teilbereich anschließenden zweiten Teilbereich aufweist. Vorzugsweise ist dieser zweite Teilbereich zum ersten Teilbereich entgegengesetzt geneigt, so dass zwischen diesen beiden ein Knick ausgebildet ist. Die Bodenfläche ist vorzugsweise plan, konkav und/oder konvex ausgebildet.

Vorteilhaft ist es, wenn zumindest eine der beiden Bodenklappen eine sich an die jeweilige Bodenfläche anschließende Seitenfläche aufweist. Die Seitenfläche ist vorzugsweise derart geneigt, dass sich bei geschlossener Bodenklappe der Behälter in Richtung des Bodens, vorzugsweise trichterförmig, verjüngt.

Vorteilhaft ist es, wenn die Bodenklappen an zwei gegenüberliegenden Seitenflächen, insbesondere Stirnseitenflächen, in einem jeweiligen Anlenkpunkt gelenkig gelagert sind. Diesbezüglich ist es ferner vorteilhaft, wenn die Anlenkpunkte der beiden Bodenklappen symmetrisch zur Längsmittelebene angeordnet sind. Zusätzlich oder alternativ ist es vorteilhaft, wenn die beiden Bodenklappen um den gleichen maximalen Öffnungswinkel schwenkbar sind.

Auch ist es vorteilhaft, wenn die beiden Bodenklappen in ihrer Offenstellung eine zwischen ihrer jeweiligen Schüttkante und der Trennebene ausgebildete maximale Öffnungsbreite aufweisen. Um die Auswurfmenge an Faserkomponenten je Bodenklappe derart beeinflussen zu können, dass die Faserkomponentenverteilung in Querrichtung des Mischbandes möglichst homogen ausgebildet ist, ist es vorteilhaft, wenn die beiden Bodenklappen zueinander unterschiedlich große maximale Öffnungsbreiten aufweisen.

Vorgeschlagen wird ferner eine Schalenwaage zum Wiegen und Abwerfen von Faserkomponenten auf ein Mischband, die vorzugsweise gemäß der vorangegangenen Beschreibung ausgebildet ist, wobei die genannten Merkmale einzeln oder in beliebiger Kombination vorhanden sein können. die Schalenwaage umfasst einen nach oben offenen Behälter, der mehrere Seitenwände und einen Boden umfasst, wobei der Boden durch eine einzelne drehbar angelenkte Bodenklappe ausgebildet ist, die aus einer an einer der Seitenwände anliegenden Schließstellung in eine von dieser Seitenwand weggeklappten Offenstellung rotierbar ist, oder wobei der Boden in Behälterlängsrichtung zweigeteilt ist und durch zwei drehbar angelenkte Bodenklappen ausgebildet ist, die aus einer aneinander anliegenden inneren Schließstellung voneinander weg in eine äußere Offenstellung rotierbar sind. Die Schalenwaage umfasst einen Steuerungsmechanismus zum Schließen und Öffnen der einzelnen Bodenklappe oder der beiden Bodenklappen des zweigeteilten Bodens. Ferner weist die Schalenwaage eine elektronische Steuerung zum Steuern des Steuerungsmechanismus auf. Der Steuerungsmechanismus ist derart ausgebildet und/oder die Steuerung ist derart programmiert, dass eine Rotationsgeschwindigkeit und/oder eine Rotationsbeschleunigung der einzelnen Bodenklappe oder zumindest einer der beiden Bodenklappen des zweigeteilten Bodens in Abhängigkeit des Öffnungswinkels steuerbar ist. Zusätzlich oder alternativ ist der Steuerungsmechanismus derart ausgebildet und/oder die Steuerung derart programmiert, dass der Öffnungswinkel der einzelnen Bodenklappe oder zumindest einer der beiden Bodenklappen des zweigeteilten Bodens in Abhängigkeit der Zeit steuerbar ist. Hierdurch kann vorteilhafterweise die Abwurfmenge der Faserkomponenten in Mischbandquerrichtung in einem Teilbereich des Mischbandes beeinflusst werden. Somit kann vorteilhafterweise eine homogenere Verteilung der Faserkomponenten in Querrichtung des Mischbandes erzielt werden. Hierdurch kann eine vollständige Entleerung der Schalenwaage sichergestellt werden, da Schüttkegel vermieden werden. Ferner werden Störungen beim Materialtransport vermieden. Des Weiteren kann hierdurch eine sehr kostengünstige Schalenwaage geschaffen werden, mittels der eine sehr gute Verteilung erzielt werden kann.

Vorteilhaft ist es, wenn die Steuerung derart programmiert ist, dass die Rotationsgeschwindigkeit und/oder die Rotationsbeschleunigung beim Öffnen der Bodenklappe zumindest in einem Winkelintervall konstant gehalten, erhöht und/oder reduziert wird.

Auch ist es vorteilhaft, wenn die Rotationsgeschwindigkeit und/oder die Rotationsbeschleunigung beim Öffnen der Bodenklappe in einem ersten Winkelintervall kleiner oder größer ist als in einem zweiten Winkelintervall.

Vorteilhaft ist es, wenn der Steuerungsmechanismus und/oder die Steuerung derart ausgebildet sind, dass der Öffnungswinkel stufenlos oder in diskreten Schritten einstellbar und/oder steuerbar ist.

Des Weiteren ist es vorteilhaft, wenn die Steuerung derart programmiert ist, dass die Bodenklappe bis zu einer ersten Winkelstellung geöffnet und in dieser ersten Winkelstellung innerhalb eines ersten Zeitfensters gehalten wird und/oder anschließend bis zu einer zweiten Winkelstellung geöffnet und/oder in dieser zweiten Winkelstellung innerhalb eines zweiten Zeitfensters gehalten wird.

Auch ist es vorteilhaft, wenn der Steuerungsmechanismus zumindest einen, insbesondere diskret oder stufenlos einstellbaren, Aktor umfasst und/oder dass die beiden Bodenklappen einen gemeinsamen Aktor oder jeweils einen separat ansteuerbaren Aktor aufweisen.

In einer vorteilhaften Weiterbildung der Erfindung umfasst die Schalenwaage einen, insbesondere mechanischen, pneumatischen und/oder hydraulischen, Steuerungsmechanismus, der derart ausgebildet ist, dass die Rotationsgeschwindigkeit zumindest einer Bodenklappe in Abhängigkeit des Öffnungswinkels steuerbar ist. Zusätzlich oder alternativ ist es vorteilhaft, wenn die Schalenwaage eine elektronische Steuerung umfasst, die derart programmiert ist, dass die Rotationsgeschwindigkeit zumindest einer Bodenklappe in Abhängigkeit des Öffnungswinkels steuerbar ist. Hierdurch kann vorteilhafterweise die Abwurfmenge der Faserkomponenten in einem Teilbereich des Mischbandes beeinflusst werden. Demnach werden in einem Teilbereich des Mischbandes mehr Faserkomponenten abgeworfen, je langsamer in dieser Phase die Rotationsgeschwindigkeit gewählt wird. Ist jedoch erwünscht, dass in einem Teilbereich des Mischbandes weniger Faserkomponenten abgeworfen werden sollen, ist vorzugsweise eine schnellere Rotationsgeschwindigkeit zu wählen.

Vorteilhaft ist es, wenn die Rotationsgeschwindigkeit beim Öffnen der Bodenklappe in einem ersten Winkelintervall kleiner oder größer ist als in einem zweiten Winkelintervall.

Vorteilhaft ist es, wenn die Schalenwaage eine Wiegeeinheit aufweist, mittels der die in den Behälter eingefüllten Faserkomponenten gewogen werden können.

Auch ist es vorteilhaft, wenn die beiden Bodenklappen einen gemeinsamen Aktor aufweisen, mittels dem beide Bodenklappen gleichzeitig betätigt werden können. Alternativ ist es aber auch ebenso vorteilhaft, wenn die Bodenklappen jeweils einen separat ansteuerbaren Aktor aufweisen. Hierdurch können die beiden Bodenklappen unabhängig voneinander angesteuert werden, so dass je Bodenklappe die abzuwerfende Faserkomponentenmenge beeinflussbar ist.

Vorgeschlagen wird ferner eine Mischvorrichtung für Faserkomponenten mit einem Mischband und zumindest einer über dem Mischband angeordneten Schalenwaage. Die Schalenwaage ist gemäß der vorangegangenen Beschreibung ausgebildet, wobei die genannten Komponenten einzeln oder in beliebiger Kombination vorhanden sein können. Hierdurch kann vorteilhafterweise in Querrichtung des Mischbandes eine homogenere Verteilung der Faserkomponenten erzielt werden.

Vorteilhaft ist es, wenn die Mischvorrichtung zumindest zwei in Längserstreckung des Mischbandes hintereinander angeordnete und/oder ortsfeste Schalenwaagen umfasst.

Auch ist es vorteilhaft, wenn die zumindest zwei hintereinander angeordneten Schalenwaagen zueinander um eine Hochachse des Mischbandes um 180° verdreht sind. Im Falle einer asymmetrischen Ausgestaltung der Bodenklappen kann somit die Trennebene der ersten Schalenwaage im Vergleich zur Mittelachse des Mischbandes nach links und die identisch jedoch um 180° verdrehte zweite Mischwaage nach rechts versetzt angeordnet sein. Zusätzlich oder alternativ ist es ferner vorteilhaft, wenn die beiden Schalenwaagen zu einer Querachse des Mischbandes versetzt angeordnet sind. Hierdurch können die Abwurfbereiche, in denen der Abwurf der Faserkomponenten beginnt, bei den jeweiligen Schalenwaagen in zueinander in Querrichtung des Mischbandes versetzten Bereichen gewählt werden. Vorteilhafterweise kann hierdurch eine homogenere Verteilung der Faserkomponenten in Querrichtung des Mischbandes bewirkt werden.

Weitere Vorteile der Erfindung sind in den nachfolgenden Ausführungsbeispielen beschrieben. Es zeigt:
- **Figur 1**: eine perspektivische Ansicht einer Schalenwaage mit zueinander asymmetrisch ausgebildeten Bodenklappen,
- **Figur 2a**: eine stirnseitige Seitenansicht der Schalenwaage in einer Schließstellung,
- **Figur 2b**: eine stirnseitige Seitenansicht der Schalenwaage in einer Offenstellung,
- **Figur 3a - 3c**: eine schematische Schnittdarstellung einer Bodenklappe mit Rückhaltemittel in einer Schließstellung, einer Zwischenstellung und einer Offenstellung und
- **Figur 4**: eine schematische Schnittdarstellung der Bodenklappe mit alternativ ausgebildeten Rückhaltemittel.

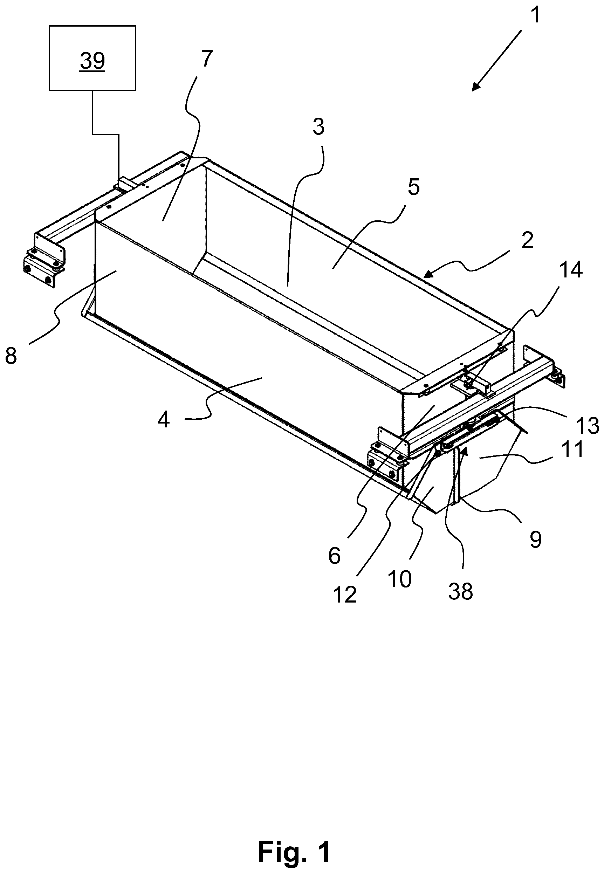

Figur 1 zeigt eine Schalenwaage 1 zum Wiegen und Abwerfen von Faserkomponenten auf ein vorliegend nicht dargestelltes Mischband. Der Schalenwaagen umfasst einen nach oben offenen Behälter 2. Über eine obere Öffnung 3 kann dieser Behälter 2 von einem vorliegend ebenfalls nicht dargestellten Wiegenkastenspeiser mit Faserkomponenten, beispielsweise einer textilen Fasermischung aus Faserflocken befüllt werden. Der Behälter 2 umfasst mehrere Seitenwände 4, 5, 6, 7, die einen geschlossenen Behälterrahmen 8 ausbilden. Gemäß dem vorliegenden Ausführungsbeispiel ist der Behälterrahmen 8 rechteckig ausgebildet, wobei dieser zwei gegenüberliegende längsseitige Seitenwände 4, 5 und zwei gegenüberliegende stirnseitige Seitenwände 6, 7 aufweist. Die längsseitigen Seitenwände 4, 5 sind hierbei länger als die beiden stirnseitigen Seitenwände 6, 7 ausgebildet. Des Weiteren umfasst der Behälter 2 einen Boden 9. Dieser schließt den Behälterrahmen 8 nach unten hin ab.

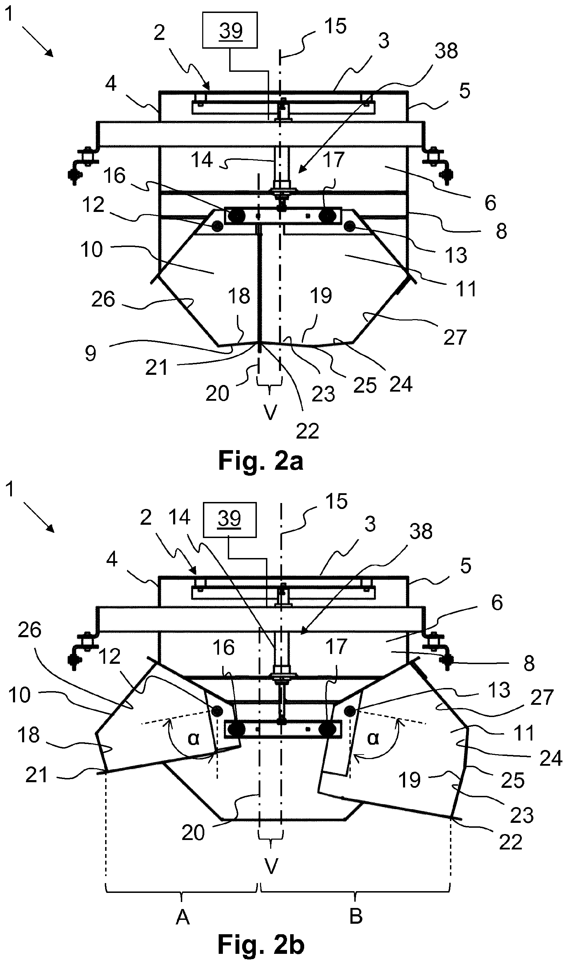

Der Boden 9 ist durch zwei Bodenklappen 10, 11 ausgebildet. Die beiden Bodenklappen 10, 11 sind am Behälterrahmen 8, insbesondere gemäß dem vorliegenden Ausführungsbeispiel an den beiden stirnseitigen Seitenwänden 6, 7, in einem jeweiligen Anlenkpunkt 12, 13 drehbar gelagert. Über einen Steuerungsmechanismus 38 der Schalenwaage 1, der vorliegend vorzugsweise zumindest einen Aktor 14 umfasst, können die beiden Bodenklappen 10, 11 aus ihrer in Figur 1 und 2a dargestellten Schließstellung in die in Figur 2b dargestellte Offenstellung rotiert werden. Hierbei werden die beiden Bodenklappen 10, 11 voneinander weg nach außen rotiert. Die Rotationsbewegung der beiden Bodenklappen 10, 11 wird über eine Steuerung 39 gesteuert.

Wie insbesondere aus Figur 2a und 2b hervorgeht sind die beiden Anlenkpunkte 12, 13 der beiden Bodenklappen 10, 11 zu einer Längsmittelebene 15 der Schalenwaage 1 symmetrisch angeordnet. Gleiches trifft auf einen ersten und zweiten Kraftangriffspunkt 16, 17 des Aktor 14 an der jeweiligen Bodenklappe 10, 11 zu. Der Aktor 14 ist gemäß dem vorliegenden Ausführungsbeispiel nicht unmittelbar mit der jeweiligen Bodenklappe 10, 11 verbunden, sondern mittelbar über eine nicht näher im Detail erläuterte Mechanik. Aufgrund der zueinander symmetrischen Kraftangriffspunkte 16, 17 sowie Anlenkpunkte 12, 13 sind die beiden Bodenklappen jeweils um einen gleichen maximalen Öffnungswinkel α rotierbar.

Wie insbesondere aus den Figuren 1, 2a und 2b hervorgeht, sind die beiden Bodenklappen 10, 11 zueinander asymmetrisch ausgebildet. Infolgedessen weisen diese im Vergleich zueinander unterschiedlich große Bodenflächen 18, 19 auf. Wie insbesondere aus Figur 2a hervorgeht, ist somit eine der beiden Bodenklappen 10 schmäler und die andere Bodenklappe 11 breiter ausgebildet. In der in Figur 2a dargestellten Schließstellung weisen die beiden Bodenklappen 10, 11 zusammen eine im Wesentlichen zur Längsmittelebene 15 des Behälters 2 symmetrische Grundform auf. Die beiden Bodenklappen 10, 11 sind jedoch unterschiedlich groß, so dass diese zueinander asymmetrisch ausgebildet sind. Hierfür verläuft eine Trennebene 20 der beiden Bodenklappen 10, 11 nicht in der Längsmittelebene 15. Stattdessen weist die Trennebene 20 gemäß Figur 2a zu der Längsmittelebene 15 des Behälters 2 einen translatorischen Versatz V auf.

Durch die vorstehend beschriebene asymmetrische Ausgestaltung der beiden Bodenklappen 10, 11 kann vorteilhafterweise die in dem Behälter 2 befindliche Faserkomponente homogener über die Breite des vorliegend nicht dargestellten Mischbandes erzielt werden. So besteht im Wesentlichen die Problematik, dass bei Wegekastenspeisern durch die meist mittig über dem Mischband angeordnete Schalenwaage ein Schüttkegel entsteht. Dieser kann bei mehreren hintereinander angeordneten Schalenwaagen in kurzer Zeit zu hohen Faseranhäufungen führen. Hierbei können in nachteiliger Weise Fehlwägungen durch nicht vollständig entleerte Schalenwaagen und mittig zu hohe Materialdichten mit Störungen im Materialtransport und in der Öffnung an der nachgeschalteten Mischwalze auftreten. Infolgedessen wird eine homogenere Breitenverteilung der Faserkomponenten in Querrichtung des Mischbandes angestrebt, die beispielsweise gemäß einer asymmetrischen Ausbildung der beiden Bodenklappen 10, 11 erzielbar ist. Demnach wird die Schalenwaage 1 in der Praxis nicht homogen befüllt. Stattdessen treten in Querrichtung der Schalenwaage 1 zur Längsmittelebene 15 versetzte Füllmaxima auf. Durch eine entsprechende asymmetrische Ausgestaltung der Bodenklappen 10, 11 kann diese asymmetrische Befüllung kompensiert werden und eine homogenere Breitenverteilung beim Entleeren auf dem Mischband erzielt werden.

Wie insbesondere aus Figur 1 und 2a hervorgeht, sind die beiden Bodenflächen 18, 19 der beiden Bodenklappen 10, 11 zueinander in Behälterlängsrichtung gleich lang. Aufgrund der asymmetrischen Ausgestaltung sind diese jedoch in Behälterquerrichtung gemäß Figur 2a unterschiedlich breit ausgebildet.

Gemäß dem vorliegenden Ausführungsbeispiel ist die erste Bodenfläche 18 der ersten Bodenklappe 10 gegenüber der Horizontalen geneigt. In der in Figur 2a dargestellten Querschnittsansicht des Behälters 2 fällt die erste Bodenfläche 18 demnach von einer Schüttkante 21 der Bodenklappe ausgehend nach außen hin, d.h. in Richtung der ersten linksseitigen Seitenwand 4, ab. Gleiches trifft auf die zweite Bodenklappe 11 zu. Die zweite Bodenfläche 19 der zweiten Bodenklappe 11 weist jedoch einen ersten und zweiten Teilbereich 23, 24 auf. Der erste Teilbereich 23 ist hierbei analog zur ersten Bodenfläche 18 der ersten Bodenklappe 10 ausgebildet. Demnach fällt der erste Teilbereich 23 von der zweiten Schüttkante 22 ausgehend nach außen hin ab. Der zweite Teilbereich 24 ist jedoch im Vergleich zum ersten Teilbereich 23 entgegengesetzt geneigt. Infolgedessen ist zwischen dem ersten und zweiten Teilbereich 23, 24 ein Knick 25 ausgebildet. Die zweite Bodenfläche 19 weist jedoch eine im Wesentlichen konkave Form auf.

Gemäß Figur 1 und 2a umfassen die beiden Bodenklappen 10, 11 zusätzlich zu ihren Bodenflächen 18, 19 jeweils eine Seitenfläche 26, 27. Die beiden Seitenflächen 26, 27 schließen sich nach außen hin an die jeweilige Bodenfläche 18, 19 an. Gemäß dem vorliegenden Ausführungsbeispiel sind die beiden Seitenflächen 26, 27 gegenüber einer Vertikalen zueinander geneigt, so dass diese in der in Figur 2a dargestellten Seitenansicht im Wesentlichen trichterförmig in Richtung der beiden Bodenflächen 18, 19 zulaufen. Die Bodenflächen 18, 19, insbesondere deren Teilbereiche 23, 24, und/oder die Seitenflächen 26, 27 können wie dargestellt als plane Fläche ausgebildet sein. Es ist aber auch ebenso denkbar, dass diese eine im Querschnitt konvexe oder konkave Form aufweisen. Des Weiteren kann beim Übergang zwischen den jeweiligen Seitenflächen 26, 27 in die jeweiligen Bodenflächen 18, 19 eine Kante ausgebildet sein. Alternativ kann der Übergang aber auch durch eine Rundung ausgebildet sein.

Wie bereits vorstehend erwähnt, zeigt Figur 2b die Schalenwaage 1 in der Offenstellung. In dieser sind die beiden Bodenklappen 10, 11 voneinander weg jeweils um ihren maximalen Öffnungswinkel α rotiert. In dieser Offenstellung weist jede der beiden Bodenklappen 10, 11 eine zwischen ihrer jeweiligen Schüttkante 21, 22 und der Trennebene 20 ausgebildete maximale Öffnungsbreite A, B auf. Aufgrund der asymmetrischen Ausgestaltung der beiden Bodenklappen 10, 11 sind die maximalen Öffnungsbreiten A, B unterschiedlich groß. Gemäß dem vorliegenden Ausführungsbeispiel ist die maximale Öffnungsbreite A der ersten Bodenklappe 10 kleiner als die maximale Öffnungsbreite B der zweiten Bodenklappe 11.

Alternativ könnten die beiden in Figur 1, 2a und 2b dargestellt Bodenklappen 10, 11 in einem vorliegend nicht dargestellten Ausführungsbeispiel aber auch symmetrisch zueinander ausgebildet sein. Des Weiteren ist es ebenso denkbar, dass der Boden 9 durch eine einzelne drehbar angelenkte Bodenklappe ausgebildet ist, die aus einer an einer der Seitenwände anliegenden Schließstellung in eine von dieser Seitenwand weggeklappten Offenstellung rotierbar ist.

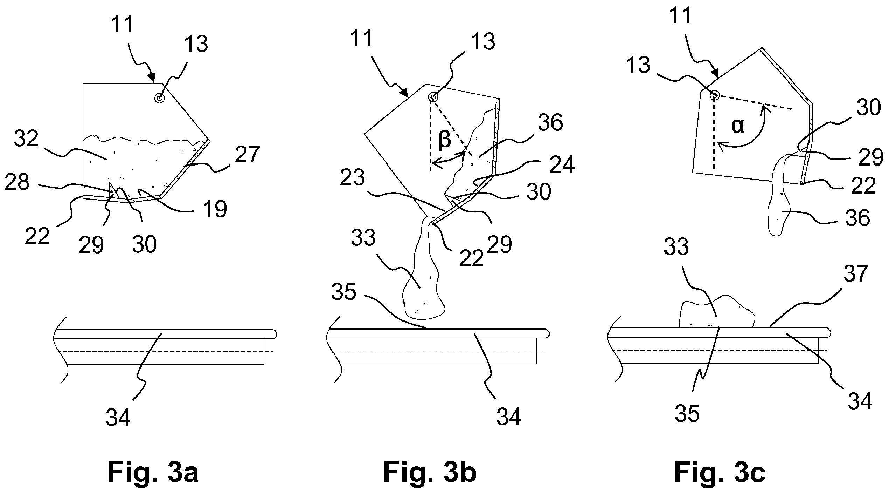

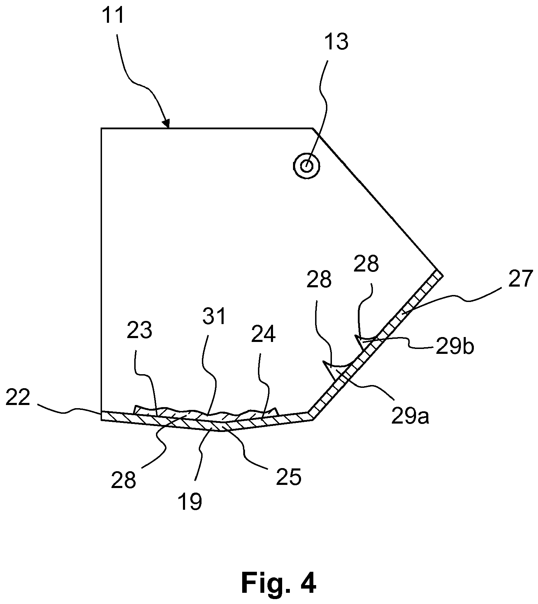

In den Figuren 3a, 3b, 3c ist ein Ausführungsbeispiel einer Bodenklappe 11 in unterschiedlichen Rotationsstellungen gezeigt. Hierbei kann die Bodenklappe 11 eine einzelne drehbar angelankte Bodenklappe 11 sein, die aus einer an einer der Seitenwände 4 anliegenden Schließstellung in eine von dieser Seitenwand 4 weggeklappten Offenstellung rotierbar ist. Alternativ kann die Bodenklappe 11 aber auch eine von zwei Bodenklappen eines in Behälterlängsrichtung zweigeteilten Bodens 9 sein. Die beiden Bodenklappen können zueinander symmetrisch oder asymmetrisch ausgebildet sein. Figur 3a zeigt die Bodenklappe 11 in der Schließstellung. In dieser Schließstellung arbeitet die dargestellte Bodenklappe 11 mit einer weiteren Bodenklappe 10 zusammen, wie beispielsweise in Figur 2a dargestellt. Die in Figur 3a nicht dargestellte zusätzliche Bodenklappe 10 muss hierbei nicht zwingend asymmetrisch zur dargestellten Bodenklappe 11 ausgebildet sein. Alternativ kann mit der in Figur 3a dargestellten Bodenklappe 11 auch eine im Wesentlichen von der äußeren Grundform symmetrische Bodenklappe interagieren. Bevorzugter Weise ist jedoch die vorliegend nicht dargestellte zusätzliche Bodenklappe 10 gemäß dem in den Figuren 1 und 2 dargestellten Ausführungsbeispiel ausgebildet. Alternativ es sich aber auch um eine einzelne Bodenklappe 11 handeln, die mit einer der Seitenwände 4 zusammenarbeitet. Die vorstehenden Alternativen treffen auch auf die in Figur 4 gezeigte Bodenklappe 11 zu.

Bei der nachfolgenden Beschreibung der in den Figuren 3a, 3b, 3c sowie 4 dargestellten Ausführungsbeispiele der Bodenklappe 11 werden für Merkmale, die im Vergleich zu dem in Figur 1, 2a, 2b dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und/oder Wirkweise der vorstehend bereits beschriebenen Merkmale.

Gemäß Figur 3a weist die Bodenklappe 11 an ihrer Bodenfläche 19 ein Rückhaltemittel 28 auf. Das in den Figuren 1, 2a und 2b dargestellte erste Ausführungsbeispiel, insbesondere die erste und/oder zweite Bodenklappe 10, 11, kann ebenfalls ein gemäß der nachfolgenden Beschreibung ausgebildetes Rückhaltemittel 28 aufweisen.

In dem in Figur 3a dargestellten Ausführungsbeispiel ist dieses Rückhaltemittel 28 als Rückhalteelement 29 ausgebildet. Das Rückhalteelement 29 ist von der Schüttkante 22 beabstandet. Vorliegend ist das Rückhalteelement 29 als Erhebung ausgebildet. Es erstreckt sich vorzugsweise über die gesamte Länge der zugeordneten Bodenklappe 11. Alternativ kann das Rückhalteelement 29 aber ebenso auch als Vertiefung oder Absatz ausgebildet sein. Vorliegend sind das Rückhalteelement 29 und die Bodenfläche 19 zweiteilig ausgebildet. Das Rückhalteelement 29 ist demnach vorzugsweise fest oder lösbar mit der Bodenfläche 19 verbunden. Hierbei kann das Rückhalteelement 29 mit der Bodenfläche 19 verschweißt, verschraubt oder verklebt sein. Alternativ ist es aber auch ebenso denkbar, dass das Rückhalteelement 29 einteilig mit der Bodenfläche 19 ausgebildet ist oder aber auch durch eine entsprechende Formung der Bodenfläche 19 gebildet wird.

Das Rückhalteelement 29 weist gemäß Figur 3a eine Rückhaltefläche 30 auf, mittels der ein Teil der Faserkomponenten beim Öffnen des Behälters 2 bis zu einem bestimmten Öffnungswinkel zurückgehalten werden kann. Die Rückhaltefläche 30 ist gemäß dem vorliegenden Ausführungsbeispiel plan ausgebildet. Alternativ ist es aber auch ebenso denkbar, dass diese konkav und/oder konvex ausgebildet ist. Die Rückhaltefläche 30 ist des Weiteren gemäß dem vorliegenden Ausführungsbeispiel gegenüber der zugeordneten Bodenfläche 19 geneigt, insbesondere in Richtung der Schüttkante 22. Alternativ kann das Rückhalteelement 29 aber auch derart ausgebildet sein, dass die Rückhaltefläche 30 von der Schüttkante 22 weg geneigt oder aber auch zur Bodenfläche 19 lotrecht ausgerichtet ist.

Des Weiteren können, wie beispielsweise in Figur 4 gezeigt, auch mehrere Rückhalteelemente 29 hintereinander angeordnet sein. Diese können zueinander identisch oder aber auch unterschiedlich, insbesondere unterschiedlich groß und/oder geformt, sein. Des Weiteren kann gemäß Figur 4 das Rückhaltemittel 28 ferner eine Rückhaltestruktur 31 sein. Die Rückhaltestruktur 31 ist beispielsweise eine Riffelung, Körnung und/oder eine Wellung, die auf der Bodenfläche 19 angeordnet ist. Die Rückhaltestruktur 31 kann hierbei in der Bodenfläche 19 eingearbeitet sein. So kann die Bodenfläche 19 beispielsweise durch entsprechende Bearbeitung aufgeraut sein. Alternativ kann aber auch ein zusätzliches Mittel aufgetragen sein, das die Reibung im Vergleich zu der unbehandelten Bodenfläche 19 erhöht. Das als Rückhaltestruktur 31 ausgebildete Rückhaltemittel 28 erhöht demnach die Haftung zwischen der Bodenklappe 11 und den Faserkomponenten 32.

Die Rückhaltestruktur 31 kann ebenso auch durch eine Vielzahl hintereinander angeordneter Rückhalteelemente 29 ausgebildet sein. Das Rückhaltemittel 28, insbesondere das Rückhalteelement 29 und/oder die Rückhaltestruktur 31, dienen demnach dazu, beim Öffnen der zugeordneten Bodenklappe 11 einen Teil der Faserkomponenten 32 mittels Form- und/oder Reibschluss bis zu einem Teilöffnungswinkel β zurückhalten zu können.

Dies ist beispielsweise in den Figuren 3a, 3b, 3c veranschaulicht. Demnach wird in der in Figur 3a dargestellten Schließstellung der Bodenklappe 11 verhindert, dass in Zusammenwirken mit der vorliegend nicht dargestellten zweiten Bodenklappe 10 Faserkomponenten 32 auf das unterhalb der Schalenwaage 1 angeordnete Mischband gelangen können.

Figur 3b zeigt die Bodenklappe 11 in einer Zwischenposition, in der diese um einen Teilöffnungswinkel β rotiert ist. In diesem Zustand wird eine erste Teilmenge 33 der Faserkomponenten 32 in Querrichtung des Mischbandes 34 in einem ersten Mischbandbereich 35 geschüttet. Zugleich wird über das Rückhaltemittel 28 eine zweite Teilmenge 36 der Faserkomponenten 32 im Inneren des Behälters zurückgehalten.

In Figur 3c ist die Bodenklappe 11 bis in ihre Offenstellung rotiert. Die Bodenklappe 11 ist somit um ihren maximalen Öffnungswinkel α rotiert. In diesem Zustand kann das Rückhaltemittel 28 die zweite Teilmenge 36 der Faserkomponenten 32 nicht mehr zurückhalten, so dass die zweite Teilmenge 36 nach unten auf das Mischband 34 entleert wird. Dadurch, dass die Bodenklappe 11 im Vergleich zu dem in Figur 3b dargestellten Zustand weiter rotiert ist, wird die zweite Teilmenge 36 der Faserkomponenten 32 in einem zum ersten Mischbandbereich 35 versetzten zweiten Mischbandbereich 37 abgeladen. Vorteilhafterweise kann durch das Rückhaltemittel 28 somit der Abgabebereich auf dem Mischband 34 in dessen Querrichtung beeinflusst werden. Hierdurch kann eine in Querrichtung des Mischbandes 34 homogenere Verteilung der Faserkomponenten 32 bewirkt werden.

Die vorstehende in Form von diskreten Schritten beschriebe Abgabe der Faserkomponenten 32 läuft in der Praxis kontinuierlich und ineinander fließend ab. Des Weiteren ist es vorteilhaft, wenn die Geschwindigkeit beim Öffnen der Bodenklappe gesteuert wird. So kann beispielsweise die Steuerung derart ausgebildet sein, dass die Rotationsgeschwindigkeit der Bodenklappe 11 in Abhängigkeit des Öffnungswinkels α, β gesteuert wird. So ist es vorteilhaft, wenn die Rotationsgeschwindigkeit beim Öffnen der Bodenklappe 11 in einem ersten Winkelintervall, beispielsweise bis zum in Figur 3b dargestellten Teilöffnungswinkel β kleiner oder größer ist als in einem, beispielsweise anschließenden zweiten Winkelintervall. Die Steuerung der Rotationsgeschwindigkeit in Abhängigkeit des Öffnungswinkels kann beispielsweise passiv durch einen mechanischen, pneumatischen und/oder hydraulischen Steuermechanismus realisiert sein. Hierbei kann beispielsweise ein Getriebe und/oder eine Anlenkung zwischen Bodenklappe 11 und Aktor 14 ausgebildet sein, die in Abhängigkeit des Öffnungswinkels unterschiedliche Rotationsgeschwindigkeiten hervorruft. Zusätzlich oder alternativ ist es aber auch ebenso denkbar, dass die Schalenwaage 1 eine elektronische Steuerung umfasst, mittels der die Geschwindigkeit des Aktors 14 beeinflussbar ist, um vorstehende Wirkung erzielen zu können.

Wie bereits vorstehend erwähnt, zeigt Figur 4 ein alternatives Ausführungsbeispiel der Bodenklappe 11 mit unterschiedlichen Rückhaltemitteln 28. So weist die dargestellte Bodenklappe 11 im Bereich der Bodenfläche 19 eine Rückhaltestruktur 31 auf. Die Rückhaltestruktur 31 ist hierbei insbesondere als Riffelung, Körnung und/oder Wellung ausgebildet. Zusätzlich weist die Bodenklappe 11 zwei hervorstehende Rückhalteelemente 29a, 29b auf. Diese sind gemäß dem vorliegenden Ausführungsbeispiel an der Seitenfläche 27 angeordnet. Sowohl die Rückhalteelemente 29a, 29b als auch die Rückhaltestruktur 31 können im Bereich der Bodenfläche 19 und/oder Seitenfläche 27 angeordnet sein.

Wie bereits vorstehend erwähnt, umfasst die Schalenwaage 1 gemäß der vorangegangenen Beschreibung einen Steuerungsmechanismus 38 zum Schließen und Öffnen der einzelnen Bodenklappe 11 des einteiligen Bodens 9 oder der beiden Bodenklappen 10, 11 des zweigeteilten Bodens 9. Ferner weist die Schalenwaage 1 die elektronische Steuerung 39 zum Steuern des Steuerungsmechanismus auf (vgl. Figur 1). Der Steuerungsmechanismus 38 ist derart ausgebildet und/oder die Steuerung 39 ist derart programmiert, dass eine Rotationsgeschwindigkeit und/oder eine Rotationsbeschleunigung der einzelnen Bodenklappe 11 oder zumindest einer der beiden Bodenklappen 10, 11 des zweigeteilten Bodens 9 in Abhängigkeit des Öffnungswinkels steuerbar ist. Zusätzlich oder alternativ ist der Steuerungsmechanismus 38 derart ausgebildet und/oder die Steuerung 39 derart programmiert, dass der Öffnungswinkel der einzelnen Bodenklappe 11 oder zumindest einer der beiden Bodenklappen 10, 11 des zweigeteilten Bodens 9 in Abhängigkeit der Zeit steuerbar ist. Hierdurch kann vorteilhafterweise die Abwurfmenge der Faserkomponenten in Mischbandquerrichtung in einem Teilbereich des Mischbandes 34 beeinflusst werden. Somit kann vorteilhafterweise eine homogenere Verteilung der Faserkomponenten in Querrichtung des Mischbandes 34 erzielt werden. Hierdurch kann eine vollständige Entleerung der Schalenwaage 1 sichergestellt werden, da Schüttkegel vermieden werden. Ferner werden Störungen beim Materialtransport vermieden. Des Weiteren kann hierdurch eine sehr kostengünstige Schalenwaage 1 geschaffen werden, mittels der eine sehr gute Verteilung erzielt werden kann.

Die Steuerung 39 ist derart programmiert, dass die Rotationsgeschwindigkeit und/oder die Rotationsbeschleunigung beim Öffnen der zumindest einen Bodenklappe 10, 11 zumindest in einem Winkelintervall konstant gehalten, erhöht und/oder reduziert wird. Auch ist es vorteilhaft, wenn die Rotationsgeschwindigkeit und/oder die Rotationsbeschleunigung beim Öffnen der zumindest einen Bodenklappe 10, 11 in einem ersten Winkelintervall kleiner oder größer ist als in einem zweiten Winkelintervall. Vorteilhaft ist es, wenn der Steuerungsmechanismus 38 und/oder die Steuerung 39 derart ausgebildet sind, dass der Öffnungswinkel stufenlos oder in diskreten Schritten einstellbar und/oder steuerbar ist. Des Weiteren ist es vorteilhaft, wenn die Steuerung 39 derart programmiert ist, dass die zumindest eine Bodenklappe 10, 11 bis zu einer ersten Winkelstellung geöffnet und in dieser ersten Winkelstellung innerhalb eines ersten Zeitfensters gehalten wird und/oder anschließend bis zu einer zweiten Winkelstellung geöffnet und/oder in dieser zweiten Winkelstellung innerhalb eines zweiten Zeitfensters gehalten wird. Auch ist es vorteilhaft, wenn der Steuerungsmechanismus 38 zumindest den, insbesondere diskret oder stufenlos einstellbaren, Aktor 14 umfasst und/oder dass die beiden Bodenklappen 10, 11 einen gemeinsamen Aktor 14 oder jeweils einen separat ansteuerbaren Aktor 14 aufweisen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Schalenwaage
- 2: Behälter
- 3: Obere Öffnung
- 4: erste längsseitige Seitenwand
- 5: zweite längsseitige Seitenwand
- 6: erste stirnseitige Seitenwand
- 7: zweite stirnseitige Seitenwand
- 8: Behälterrahmen
- 9: Boden
- 10: Erste Bodenklappe
- 11: Zweite Bodenklappe
- 12: Erster Anlenkpunkt
- 13: Zweiter Anlenkpunkt
- 14: Aktor
- 15: Längsmittelebene
- 16: Erster Kraftangriffspunkt
- 17: Zweiter Kraftangriffspunkt
- 18: Erste Bodenfläche
- 19: Zweite Bodenfläche
- 20: Trennebene
- 21: Erste Schüttkante
- 22: Zweite Schüttkante
- 23: erster Teilbereich
- 24: zweiter Teilbereich
- 25: Knick
- 26: Erste Seitenfläche
- 27: Zweite Seitenfläche
- 28: Rückhaltemittel
- 29: Rückhalteelement
- 30: Rückhaltefläche
- 31: Rückhaltestruktur
- 32: Faserkomponenten
- 33: Erste Teilmenge der Faserkomponenten
- 34: Mischband
- 35: Erster Mischbandbereich
- 36: Zweite Teilmenge der Faserkomponenten
- 37: Zweiter Mischbandbereich
- 38: Steuerungsmechanismus
- 39: Steuerung

- α: maximaler Öffnungswinkel
- β: Teilöffnungswinkel

- V: Versatz
- A: Maximale Öffnungsbereite der ersten Bodenklappe
- B: Maximale Öffnungsbereite der zweiten Bodenklappe

## Patentansprüche

1. Schalenwaage zum Wiegen und Abwerfen von Faserkomponenten (32) auf ein Mischband (34)
mit einem nach oben offenen Behälter (2),
der mehrere Seitenwände (4, 5, 6, 7) und
einen Boden (9) umfasst,
wobei der Boden (9) durch eine einzelne drehbar angelenkte Bodenklappe (10) ausgebildet ist, die aus einer an einer der Seitenwände (4) anliegenden Schließstellung in eine von dieser Seitenwand (4) weggeklappten Offenstellung rotierbar ist, oder
wobei der Boden (9) in Behälterlängsrichtung zweigeteilt ist und durch zwei drehbar angelenkte Bodenklappen (10, 11) ausgebildet ist, die aus einer aneinander anliegenden inneren Schließstellung voneinander weg in eine äußere Offenstellung rotierbar sind,
**dadurch gekennzeichnet,**
**dass** die einzelne Bodenklappe (10) oder zumindest eine der beiden Bodenklappen (10, 11) des zweigeteilten Bodens (9) an ihrer Bodenfläche (18, 19) zumindest in einem Bereich ein Rückhaltemittel (28) aufweist, mittels dem beim Öffnen der zugeordneten Bodenklappe (18, 19) ein Teil der Faserkomponenten (32) mittels Form- und/oder Reibschluss bis zu einem Teilöffnungswinkel (β) zurückhaltbar ist.

2. Schalenwaage nach einem oder mehreren der vorherigen Ansprüche,
**dadurch gekennzeichnet, dass** das Rückhaltemittel (28) von der Schüttkante (21, 22) beabstandet ist.

3. Schalenwaage nach einem oder mehreren der vorherigen Ansprüche,
**dadurch gekennzeichnet, dass** das Rückhaltemittel (28) eine Rückhaltestruktur (31), insbesondere eine Riffelung, Körnung und/oder eine Wellung, ist, die vorzugsweise im Vergleich zu einem rückhaltemittelfreien Bereich der Bodenfläche (18, 19) einen höheren Reibungskoeffizienten aufweist.

4. Schalenwaage nach einem oder mehreren der vorherigen Ansprüche,
**dadurch gekennzeichnet, dass** das Rückhaltemittel (28) zumindest ein Rückhalteelement (29), insbesondere eine Erhebung und/oder Vertiefung, ist, die sich vorzugsweise parallel zur Längsmittelebene (15) und/oder über die gesamte Länge der zugeordneten Bodenklappe (10, 11) erstreckt.

5. Schalenwaage nach einem oder mehreren der vorherigen Ansprüche,
**dadurch gekennzeichnet, dass** die Rückhaltestruktur (31) und/oder das Rückhalteelement (29) einteilig mit der Bodenklappe (10, 11) ausgebildet ist oder mit dieser verbunden, insbesondere verklebt, verschraubt und/oder verschweißt, ist.

6. Schalenwaage nach einem oder mehreren der vorherigen Ansprüche,
**dadurch gekennzeichnet, dass** die einzelne Bodenklappe oder zumindest eine der beiden Bodenklappen (10, 11) des zweigeteilten Bodens (9) zumindest teilweise als Blechbiegeteil ausgebildet ist,
eine konstante Wandstärke aufweist und/oder
derart geformt und/oder derart aus mehreren Einzelteilen zusammengefügt, insbesondere zusammengeschweißt, ist, dass die Bodenklappe (10, 11) in einem Bereich eine das Rückhaltelement (29) und/oder die Rückhaltestruktur (31) bildende Form aufweist.

7. Schalenwaage nach einem oder mehreren der vorherigen Ansprüche,
**dadurch gekennzeichnet, dass** das Rückhalteelement (29) eine, insbesondere plane, konkave und/oder konvexe, Rückhaltefläche (30) aufweist, die vorzugsweise mit der Rückhaltestruktur (31) versehen ist.

8. Schalenwaage nach einem oder mehreren der vorherigen Ansprüche,
**dadurch gekennzeichnet, dass** sich das Rückhalteelement (29) einer der beiden Bodenklappen (10) in den Bereich der anderen Bodenklappe (11) hineinerstreckt.

9. Schalenwaage nach einem oder mehreren der vorherigen Ansprüche,
**dadurch gekennzeichnet, dass** zumindest eine der Bodenklappen (10, 11) von der Schüttkante (21, 22) ausgehend nach außen hin mehrere hintereinander angeordnete Rückhaltemittel (28), insbesondere Ruckhaltestrukturen (31) und/oder Rückhalteelemente (29a, 29b), aufweist.

10. Schalenwaage, insbesondere nach einem oder mehreren der vorherigen Ansprüche, zum Wiegen und Abwerfen von Faserkomponenten (32) auf ein Mischband (34)
mit einem nach oben offenen Behälter (2),
der mehrere Seitenwände (4, 5, 6, 7) und
einen in Behälterlängsrichtung zweigeteilten Boden (9) umfasst, wobei der Boden (9) durch zwei drehbar angelenkte Bodenklappen (10, 11) ausgebildet ist, die aus einer aneinander anliegenden inneren Schließstellung voneinander weg in eine äußere Offenstellung rotierbar sind,
**dadurch gekennzeichnet,**
**dass** die beiden Bodenklappen (10, 11) zueinander asymmetrisch ausgebildet sind, so dass diese unterschiedlich große Bodenflächen (18, 19) aufweisen.

11. Schalenwaage nach dem vorherigen Anspruch, **dadurch gekennzeichnet, dass** die beiden Bodenflächen (18, 19) zueinander in Behälterlängsrichtung gleich lang und/oder in Behälterquerrichtung unterschiedlich breit sind.

12. Schalenwaage nach einem oder mehreren der vorherigen Ansprüche,
**dadurch gekennzeichnet, dass** die beiden Bodenklappen (10, 11) in der Schließstellung im Bereich einer Trennebene (20) zumindest in einem Abschnitt aneinander anliegen und/oder
dass die Trennebene (20) zu einer Längsmittelebene (15) des Behälters (2) einen translatorischen Versatz (V) aufweist.

13. Schalenwaage nach einem oder mehreren der vorherigen Ansprüche,
**dadurch gekennzeichnet, dass** die Anlenkpunkte (12, 13) der beiden Bodenklappen (10, 11) symmetrisch zur Längsmittelebene (15) angeordnet sind und/oder die beiden Bodenklappen (10, 11) um den gleichen maximalen Öffnungswinkel (α) schwenkbar sind.

14. Schalenwaage nach einem oder mehreren der vorherigen Ansprüche,
**dadurch gekennzeichnet, dass** die beiden Bodenklappen (10, 11) in ihrer Offenstellung eine zwischen ihrer jeweiligen Schüttkante (21, 22) und der Trennebene (20) ausgebildete und/oder zueinander unterschiedlich große maximale Öffnungsbreite (A, B) aufweisen.

15. Schalenwaage, insbesondere nach einem oder mehreren der vorherigen Ansprüche, zum Wiegen und Abwerfen von Faserkomponenten (32) auf ein Mischband (34)
mit einem nach oben offenen Behälter (2),
der mehrere Seitenwände (4, 5, 6, 7) und
einen Boden (9) umfasst,
wobei der Boden (9) durch eine einzelne drehbar angelenkte Bodenklappe (10) ausgebildet ist, die aus einer an einer der Seitenwände (4) anliegenden Schließstellung in eine von dieser Seitenwand (4) weggeklappten Offenstellung rotierbar ist, oder
wobei der Boden (9) in Behälterlängsrichtung zweigeteilt ist und durch zwei drehbar angelenkte Bodenklappen (10, 11) ausgebildet ist, die aus einer aneinander anliegenden inneren Schließstellung voneinander weg in eine äußere Offenstellung rotierbar sind,
mit einem Steuerungsmechanismus zum Schließen und Öffnen der einzelnen Bodenklappe (10) oder der beiden Bodenklappen (10, 11) des zweigeteilten Bodens (9) und
mit einer elektronischen Steuerung zum Steuern des Steuerungsmechanismus,
**dadurch gekennzeichnet,**
**dass** der Steuerungsmechanismus derart ausgebildet ist und/oder die Steuerung derart programmiert ist,
**dass** eine Rotationsgeschwindigkeit und/oder eine Rotationsbeschleunigung der einzelnen Bodenklappe (10) oder zumindest einer der beiden Bodenklappen (10, 11) des zweigeteilten Bodens (9) in Abhängigkeit des Öffnungswinkels steuerbar ist und/oder dass der Öffnungswinkel der einzelnen Bodenklappe (10) oder zumindest einer der beiden Bodenklappen (10, 11) des zweigeteilten Bodens (9) in Abhängigkeit der Zeit steuerbar ist.

16. Schalenwaage nach einem oder mehreren der vorherigen Ansprüche,
**dadurch gekennzeichnet, dass** die Steuerung derart programmiert ist, dass die Rotationsgeschwindigkeit und/oder die Rotationsbeschleunigung beim Öffnen der Bodenklappe (10, 11) zumindest in einem Winkelintervall konstant gehalten, erhöht und/oder reduziert wird.

17. Schalenwaage nach einem oder mehreren der vorherigen Ansprüche,
**dadurch gekennzeichnet, dass** die Rotationsgeschwindigkeit und/oder die Rotationsbeschleunigung beim Öffnen der Bodenklappe (10) in einem ersten Winkelintervall kleiner oder größer ist als in einem zweiten Winkelintervall.

18. Schalenwaage nach einem oder mehreren der vorherigen Ansprüche,
**dadurch gekennzeichnet, dass** der Steuerungsmechanismus und/oder die Steuerung derart ausgebildet sind, dass der Öffnungswinkel stufenlos oder in diskreten Schritten einstellbar und/oder steuerbar ist.

19. Schalenwaage nach einem oder mehreren der vorherigen Ansprüche,
**dadurch gekennzeichnet, dass** die Steuerung derart programmiert ist, dass die Bodenklappe (10, 11) bis zu einer ersten Winkelstellung geöffnet und in dieser ersten Winkelstellung innerhalb eines ersten Zeitfensters gehalten wird und/oder
anschließend bis zu einer zweiten Winkelstellung geöffnet und/oder in dieser zweiten Winkelstellung innerhalb eines zweiten Zeitfensters gehalten wird.

20. Schalenwaage nach einem oder mehreren der vorherigen Ansprüche,
**dadurch gekennzeichnet, dass** der Steuerungsmechanismus zumindest einen, insbesondere diskret oder stufenlos einstellbaren, Aktor (14) umfasst und/oder
dass die beiden Bodenklappen (10, 11) einen gemeinsamen Aktor (14) oder jeweils einen separat ansteuerbaren Aktor aufweisen.

21. Mischvorrichtung für Faserkomponenten (32) mit einem Mischband (34) und
zumindest einer über dem Mischband (34) angeordneten Schalenwaage (1),
**dadurch gekennzeichnet,**
**dass** die Schalenwaage (1) gemäß einem oder mehreren der vorherigen Ansprüche ausgebildet ist.

22. Mischvorrichtung nach dem vorherigen Anspruch, **dadurch gekennzeichnet, dass** die Mischvorrichtung zumindest zwei in Längserstreckung des Mischbandes (34) hintereinander angeordnete und/oder ortsfeste Schalenwaagen (1) umfasst,
die zueinander um eine Hochachse des Mischbandes (34) um 180° verdreht sind und/oder zu einer Querachse des Mischbandes (34) versetzt sind.
